(19) Europäisches Patentamt
European Patent Office
Office européen des brevets

(11) **EP 4 026 633 A1**

(12) **EUROPEAN PATENT APPLICATION**
published in accordance with Art. 153(4) EPC

(43) Date of publication:
**13.07.2022 Bulletin 2022/28**

(21) Application number: **20859862.3**

(22) Date of filing: **25.08.2020**

(51) International Patent Classification (IPC):
**B22F 3/105** (2006.01)    **B22F 3/16** (2006.01)
**B33Y 30/00** (2015.01)    **B33Y 50/00** (2015.01)
**B29C 64/153** (2017.01)    **B29C 64/386** (2017.01)
**G06N 20/00** (2019.01)

(52) Cooperative Patent Classification (CPC):
**B22F 3/105; B22F 3/16; B29C 64/153;
B29C 64/386; B33Y 30/00; B33Y 50/00;
G06N 20/00;** Y02P 10/25

(86) International application number:
**PCT/JP2020/031966**

(87) International publication number:
**WO 2021/044899 (11.03.2021 Gazette 2021/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.09.2019    JP 2019161267**

(71) Applicant: **Ebara Corporation
Tokyo 144-8510 (JP)**

(72) Inventor: **SHINOZAKI, Hiroyuki
Tokyo 144-8510 (JP)**

(74) Representative: **Schmidbauer, Andreas Konrad
Wagner & Geyer Partnerschaft mbB
Patent- und Rechtsanwälte
Gewürzmühlstrasse 5
80538 München (DE)**

(54) **MACHINE LEARNING DEVICE, AM DEVICE, MACHINE LEARNING METHOD, AND METHOD FOR GENERATING LEARNING MODEL**

(57)    A technique for shortening a shaping period while preventing occurrence of fume and sputtering at an AM apparatus is provided.

According to one embodiment, a machine learning apparatus for machine learning of determination of a shaping condition at the AM apparatus is proposed. Such a machine learning apparatus acquires a state variable including a physical amount regarding shaping during and the shaping condition, learns a learning model for determining the shaping condition and determines the shaping condition on the basis of the state variable.

Fig. 6

EP 4 026 633 A1

**Description**

TECHNICAL FIELD

The present application relates to a machine learning apparatus, an AM apparatus, a machine learning method, and a method for generating a learning model.

BACKGROUND ART

A technique of directly shaping a three-dimensional object from three-dimensional data on a computer that expresses the three-dimensional object is known. For example, an additive manufacturing (AM) method is known. As an example, in the AM method using metal powder, each layer of a three-dimensional object is shaped by irradiating a portion to be shaped of paved metal powder with a laser beam or an electron beam that is a heat source, to melt and solidify or sinter the metal powder. In the AM method, a desired three-dimensional object can be shaped by repeating such processes.

CITATION LIST

PATENT LITERATURE

    PTL 1: International Publication No. WO 2015/151839
    PTL 2: Japanese Patent Laid-Open No. 2018-123381

SUMMARY OF INVENTION

TECHNICAL PROBLEM

In the AM apparatus using metal powder as a material, scanning with a beam is performed for each layer to form each layer of a shaped object, and thus, as the shaped object is larger, a shaping period becomes longer. It is desired to shorten a shaping period as one of problems of the AM apparatus. To shorten the shaping period, there is a possible measure in which an object is thickly shaped in one lamination process by thickly paving metal powder in one lamination process. However, if metal powder is thickly paved, it takes a certain period for an amount of heat to transfer inside by heat conduction characteristics of a material, so that there is a case where an object cannot be appropriately shaped as a result of only a surface of a metal powder layer melting without inside of the metal powder layer melting. There is also a possible measure for shortening a shaping period by increasing irradiation energy and scanning speed of a beam. However, if the irradiation energy of the beam is increased, a temperature of the surface of the metal powder layer excessively rises, which makes it likely to cause fume and sputtering. Occurrence of fume and sputtering may cause a defect in the shaped object or may cause a failure in an irradiation system of the beam, which may result in hampering maintenance of stable shaping. Further, while it is desired to perform maintenance of the AM apparatus at an appropriate timing to maintain stable shaping, if a frequency of maintenance increases, shaping speed per unit time of the AM apparatus can decrease and running cost can increase. One of the objects of the present application is therefore to provide a technique for shortening a shaping period while preventing occurrence of fume and sputtering at the AM apparatus. Further, another object of the present application is to provide a technique for performing maintenance at an appropriate timing at the AM apparatus.

SOLUTION TO PROBLEM

According to one embodiment, a machine learning apparatus for machine learning of determination of a shaping condition at an AM apparatus is proposed, the machine learning apparatus acquiring a state variable including a physical amount regarding shaping during shaping and the shaping condition. The shaping condition includes at least one of intensity of a beam, a size of the beam on a material, scanning speed of the beam, an irradiation angle of the beam, a focus offset amount of the beam, a focal distance of the beam, characteristics of the material, a paving condition of the material, an amount of a shielding gas, oxygen concentration or an overlapping amount of the beam. The physical amount includes at least one of captured image data of a shaped portion imaged by an imaging unit, appearance of the shaped portion obtained by processing the captured image data, a current waveform of a beam source, a voltage waveform of the beam source, energy of the beam, a wall temperature inside a shaping chamber, a thickness of a solidified portion, a shaping bead width or a sputtering occurrence amount. The machine learning apparatus then learns a learning model for determining the shaping condition and determines the shaping condition on the basis of the state variable.

According to one embodiment, a machine learning method for machine learning of determination of a shaping condition at an AM apparatus is proposed, the machine learning method including acquiring a state variable including a physical amount regarding shaping during shaping and the shaping condition. The shaping condition includes at least one of intensity of a beam, a size of a beam on a material, scanning speed of the beam, an irradiation angle of the beam, a focus offset amount of the beam, a focal distance of the beam, characteristics of the material, a paving condition of the material, an amount of a shielding gas, oxygen concentration or an overlapping amount of the beam. The physical amount includes at least one of captured image data of a shaped portion imaged by an imaging unit, appearance of the shaped portion obtained by processing the captured image data, a current waveform of a beam source, a voltage waveform of the beam source, energy of the beam, a wall temperature inside a shaping chamber, a thickness of a solidified portion, a shaping bead width or a sputtering occurrence amount. Further, the machine learning method includes learning a learning model for determining the shaping condition and determining the shaping condition on the basis of the state variable.

According to one embodiment, a method for generating a learning model for determining a shaping condition at an AM apparatus is proposed, the method includes acquiring a plurality of state variables each including a physical amount regarding shaping during shaping and the shaping condition. The shaping condition includes at least one of intensity of a beam, a size of the beam on a material, scanning speed of the beam, an irradiation angle of the beam, a focus offset amount of the beam, a focal distance of the beam, characteristics of the material, a paving condition of the material, an amount of a shielding gas, oxygen concentration or an overlapping amount of the beam. The physical amount includes at least one of captured image data of a shaped portion imaged by an imaging unit, appearance of the shaped portion obtained by processing the captured image data, a current waveform of a beam source, a voltage waveform of the beam source, energy of the beam, a wall temperature inside a shaping chamber, a thickness of a solidified portion, a shaping bead width or a sputtering occurrence amount. Further, the method includes generating a learning model that inputs the state variable and outputs the shaping condition on the basis of the acquired plurality of state variables.

BRIEF DESCRIPTION OF DRAWINGS

Fig. 1 is a view schematically illustrating an AM apparatus for manufacturing a shaped object according to one embodiment.
Fig. 2 is a schematic functional block diagram of a machine learning apparatus in the present embodiment.
Fig. 3 is a view schematically illustrating a temperature and change in state in a case where an SUS is heated.
Fig. 4 is a view for explaining rise in temperature when heat is transferred below from a surface of material powder in a case where a surface of a material is irradiated with a beam.
Fig. 5 is a graph schematically indicating rise in temperature of a lower surface when a surface of the SUS which is a material is heated.
Fig. 6 is a flowchart illustrating one example of a method for machine learning of determination of a shaping condition by the machine learning apparatus.
Fig. 7 is a view illustrating a schematic configuration of an AM system in a modification.

DESCRIPTION OF EMBODIMENTS

Embodiments of an AM apparatus for manufacturing a shaped object according to the present invention will be described below with reference to the accompanying drawings. In the accompanying drawings, the same or similar reference numerals will be assigned to the same or similar components, and overlapping description regarding the same or similar components may be omitted in description of each embodiment. Further, characteristics indicated in each embodiment can be applied to other embodiments unless inconsistent with each other.

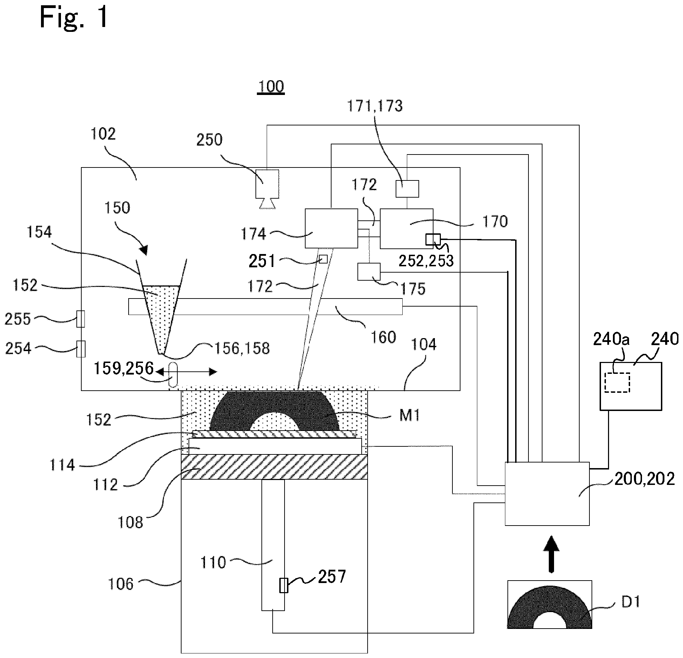

Fig. 1 is a view schematically illustrating an AM apparatus for manufacturing a shaped object according to one embodiment. As illustrated in Fig. 1, an AM apparatus 100 includes a shaping chamber 102. A buildup chamber 106 is attached on a bottom surface 104 of the shaping chamber 102. A lift table 108 is provided at the buildup chamber 106. The lift table 108 can move in a vertical direction (z direction) by a drive mechanism 110. The drive mechanism 110 may be, for example, a pneumatic or hydraulic drive mechanism or may be a drive mechanism including a motor and a ball screw. Note that while not illustrated, a sealing body for sealing a gap with an inner wall of the shaping chamber 102 is provided at the lift table 108. Further, while not illustrated, an inlet and an outlet for introducing and discharging a protective gas may be provided at the shaping chamber 102.

In one embodiment, as illustrated in Fig. 1, an XY stage 112 is provided on the lift table 108. The XY stage 112 is a stage which can move in two direction (x direction, y direction) in parallel to a plane of the lift table 108. A base plate 114 for supporting a material of the shaped object is placed on the XY stage 112.

A material supply mechanism 150 for supplying the material of the shaped object is provided above the buildup chamber 106 inside the shaping chamber 102. The material supply mechanism 150 includes a storage container 154 for storing powder 152 that becomes the material of the shaped object, for example, metal powder, and a movement mechanism 160 for moving the storage container 154. An opening 156 for discharging the material powder 152 onto the base plate 114 is provided at the storage container 154. The opening 156 can be, for example, a linear opening 156 longer than a side of the base plate 114. In this case, by configuring the movement mechanism 160 so as to move in a range longer than the other side of the base plate 114 in a direction orthogonal to the line of the opening 156, the material powder 152 can be supplied to the whole surface of the base plate 114. Further, the storage container 154 includes a valve 158 for controlling opening/closing of the opening 156. The material supply mechanism 150 may include a roller 159 for leveling the material powder 152 supplied from the storage container 154. The roller 159 can level the powder 152 supplied onto the base plate 114 while applying an arbitrary pressure to the powder 152.

While only one storage container 154 is provided in Fig. 1, a plurality of storage containers 154 may be provided as one embodiment. In a case where a plurality of storage containers 154 are provided, different materials may be stored in the respective storage containers 154 or material powder 152 that is the same material but has different particle sizes may be stored.

In one embodiment, as illustrated in Fig. 1, the AM apparatus 100 includes a beam source 170, and a scanning mechanism 174 that guides a beam 172 emitted from the beam source 170 toward the material powder 152 on the base plate 114. Further, the AM apparatus 100 illustrated in Fig. 1 includes an adjustment apparatus 171 for adjusting intensity of the beam to be radiated. Such an adjustment apparatus 171 can adjust a magnitude of a current, a voltage or power to be supplied to a laser light source or an electron beam source as the beam source 170. Further, the AM apparatus 100 illustrated in Fig. 1 includes a beam shaper 173 for adjusting a shape and profile of the beam to be radiated. The scanning mechanism 174 can irradiate an arbitrary position on a shaping surface (focus surface) on the base plate 114 with the beam 172. For example, the scanning mechanism 174 can be constituted with an arbitrary optical system in a case where a laser light source is used as the beam source 170 and can be constituted with a magnet, or the like, in a case where an electron beam source is used as the beam source 170. While in the illustrated embodiment, the beam source 170, the adjustment apparatus 171, the beam shaper 173 and the scanning mechanism 174 are provided inside the shaping chamber 102, all or part of these may be provided outside the shaping chamber 102.

In one embodiment, the AM apparatus 100 includes a molten pool monitor 175 for observing a molten pool formed by beam irradiation on the material powder 152. The molten pool monitor 175 can include a non-contact sensor and, for example, can use a scheme in which the molten pool is irradiated with a laser for measurement while a beam axis of the laser for measurement is made to overlap with a beam axis of a beam for melting a metal using a monochromatic radiation thermometer having a measurement wavelength of approximately 650 nm, and reflected light is received at a detection element such as silicon. As the molten pool monitor 175, a monitor that can measure a temperature of the molten pool, a liquid level shape, a depth, a thickness of a material solidified in one layer, or the like, can be used. Note that the laser for measurement uses a wavelength different from a wavelength of the beam for melting a metal. Temperature data measured at the molten pool monitor 175 is transmitted to a control apparatus 200. Note that as the molten pool monitor 175, an arbitrary monitor including a publicly known molten pool monitor can be used.

In one embodiment, the AM apparatus 100 includes an imaging unit 250 for imaging a shape of the shaped object. In one embodiment, the imaging unit 250 can be a 3D camera that can measure a shape of a surface of the shaped object M1 that is being shaped in three dimensions. The captured image data imaged by the imaging unit 250 is transmitted to the control apparatus 200. Note that as the imaging unit 250, an arbitrary imaging unit including a publicly known imaging unit can be used.

In one embodiment, the AM apparatus 100 includes a beam monitor 251 for detecting energy of the beam to be radiated. As the beam monitor 251, a light receiving element, a Faraday cup, or the like, provided on a path of the beam can be used. Alternatively, the beam monitor 251 may be provided at a position to be reached by a reflected beam or a beam transmissive from the path of the beam. Note that as the beam monitor 251, an arbitrary monitor including a publicly known beam monitor can be used.

In one embodiment, the AM apparatus 100 includes a current sensor 252 that measures a current flowing through the beam source 170. Further, in one embodiment, the AM apparatus 100 includes a voltage sensor 253 that measures a voltage to be supplied to the beam source 170. Note that as the current sensor 252 and the voltage sensor 253, arbitrary sensors including a publicly known current sensor and a publicly known voltage sensor can be used.

In one embodiment, the AM apparatus 100 includes a thermometer 254 for detecting a temperature of a wall surface inside the shaping chamber 102. Note that as the thermometer 254, either a contact thermometer or a non-contact thermometer cam be used, and an arbitrary thermometer including a publicly known thermometer can be used.

In one embodiment, the AM apparatus 100 includes a concentration meter 255 that measures oxygen concentration inside the shaping chamber 102. Note that as the concentration meter 255, an arbitrary concentration meter including a publicly known oxygen concentration meter can be used.

In one embodiment, the AM apparatus 100 includes a drive torque monitor 256 for detecting drive torque of a movement mechanism of the roller 159 for leveling the material powder 152 supplied from the storage container 154. Note that as the drive torque monitor 256, an arbitrary monitor such as a monitor that measures a current flowing through the movement mechanism of the roller 159 can be used.

In one embodiment, the AM apparatus 100 includes a drive torque monitor 257 for detecting torque of the drive mechanism 110 of the lift table 108. Note that as the drive torque monitor 257, an arbitrary monitor such as a monitor that measures a current flowing through the drive mechanism 110 can be used.

In the embodiment illustrated in Fig. 1, the AM apparatus 100 includes the control apparatus 200. The control apparatus 200 controls operation of various kinds of operation mechanisms of the AM apparatus 100, for example, the drive mechanisms 110, the movement mechanism 160, the beam source 170, the adjustment apparatus 171, the beam shaper 173, the scanning mechanism 174, the valve 158 of the opening 156, and the like, described above. Further, the control apparatus 200 receives measurement data from various kinds of measurement devices, for example, the molten pool monitor 175, the imaging unit 250, the beam monitor 251, the current sensor 252, the voltage sensor 253, the thermometer 254, the drive torque monitors 256 and 257, and the like. The control apparatus 200 may be constituted with a general computer that includes a CPU, a memory, and the like, and implements a predetermined function using software or may be constituted with a hardware circuit that performs dedicated arithmetic processing.

In a case where a three-dimensional object is shaped by the AM apparatus 100 according to the embodiment illustrated in Fig. 1, shaping is performed roughly in accordance with the following procedure. First, three-dimensional data D1 of an object to be shaped is input to the control apparatus 200. The control apparatus 200 creates slice data for shaping from the input three-dimensional data D1 of the object to be shaped. Further, the control apparatus 200 creates execution data including a scanning route indicating order of scanning on the basis of the slice data and a shaping condition S2. In the present embodiment, the shaping condition S2 is learned and determined by a machine learning apparatus 240. The machine learning apparatus 240, learning by the machine learning apparatus 240 and determination of the shaping condition S2 will be described later. Here, the shaping condition S2 includes, for example, at least one of a beam condition, a beam scanning condition, a material condition, a paving condition of a material or an atmospheric condition of the shaping chamber 102. The beam condition includes at least one of intensity of a beam, a size of the beam on the material, an irradiation angle of the beam (with respect to an XY plane), a focus offset amount of the beam on the material or a focal distance of the beam. The intensity of the beam includes at least one of a current of the beam source 170, a voltage of the beam source 170 or energy of the beam 172, and the size of the beam on the material includes at least one of a size in a scanning direction of the beam 172 or a size in a direction perpendicular to the scanning direction of the beam 172. The beam scanning condition includes at least one of scanning speed of the beam, a scanning pattern, or an overlapping amount of the beam (scanning interval). The scanning pattern includes, for example, scanning in one direction, scanning in a reciprocating direction, scanning in a zig-zag manner, movement in a lateral direction while forming a small circle, and the like. The material condition includes at least one of density, specific heat or thermal conductivity of the material powder 152. The paving condition of the material includes at least one of a thickness of one layer of the material to be paved or a pressure to be applied to the material by the roller 159. The atmospheric condition of the shaping chamber 102 includes an amount of a shielding gas to be supplied inside the shaping chamber 102.

The material powder 152 of the object to be shaped, for example, metal powder is put into the storage container 154. The lift table 108 of the buildup chamber 106 is moved to an upper position so that the surface of the base plate 114 comes to a focus plane of the beam 172. Then, the valve 158 of the opening 156 of the storage container 154 is open, and the storage container 154 is moved, so that the material powder 152 is uniformly supplied on the base plate 114. The material supply mechanism 150 is controlled by the control apparatus 200 so as to supply the material powder 152 corresponding to one layer of the object to be shaped to the focus plane. Then, the beam 172 is emitted from the beam source 170, and a predetermined range of the focus plane is irradiated with the beam 172 by the scanning mechanism 174 so as to melt and solidify or sinter the material powder at a predetermined position, thereby the shaped object M1 corresponding to one layer is formed. In this event, if necessary, the XY stage 112 provided on the lift table 108 may also be moved to change the irradiation position of the beam 172.

After shaping of one layer is finished, the lift table 108 of the buildup chamber 106 is lowered by a degree corresponding to one layer. The material powder 152 corresponding to one layer of the object to be shaped is supplied to the focus plane again by the material supply mechanism 150. Then, the focus plane is scanned with the beam 172 by the scanning mechanism 174 to melt and solidify or sinter the material powder 152 at a predetermined position, thereby the shaped object M1 corresponding to one layer is formed. By repeating the operation described above, the whole of the target shaped object M1 can be formed from the powder 152.

In the present embodiment, the AM apparatus 100 includes the machine learning apparatus 240 for machine learning of determination of the shaping condition. The machine learning apparatus 240 may be constituted with a general computer that includes a CPU, a memory (memory 240a), and the like, and implements a predetermined function using software or may be constituted with a hardware circuit that performs dedicated arithmetic processing. The machine learning apparatus 240 can communicate with the control apparatus 200 in a wired or wireless manner. Note that while in the present embodiment, the machine learning apparatus 240 is constituted separately from the control apparatus 200, at least part of the machine learning apparatus 240 may be constituted integrally with the control apparatus 200.

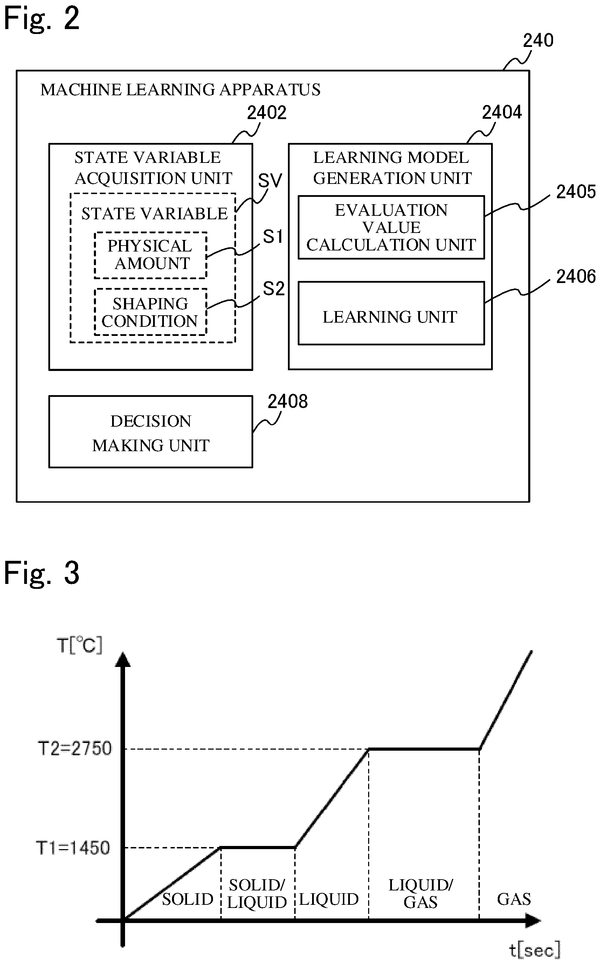

Fig. 2 is a schematic functional block diagram of the machine learning apparatus 240 in the present embodiment. The machine learning apparatus 240 includes a state variable acquisition unit 2402 that acquires a state variable SV, a learning model generation unit 2404 that learns/generates a learning model on the basis of the acquired state variable SV, and a decision making unit 2408 that selects (makes a decision on) the shaping condition of the AM apparatus 100 on the basis of the acquired state variable SV and the learning model.

The state variable acquisition unit 2402 acquires the state variable SV for each of a predetermined period (for example, several milliseconds, several tens of milliseconds). As an example, the predetermined period may be a period that is the same as or corresponds to a learning cycle by the learning model generation unit 2404. The state variable acquisition unit 2402 can acquire the state variable SV through the control apparatus 200 as an example. The state variable SV includes a physical amount S1 (hereinafter, also simply referred to as a "physical amount S1") regarding shaping during shaping and the shaping condition S2 by the AM apparatus 100 described above. Here, while in the following description, an example will be described where the physical amount S1 indicates an amount measured by various kinds of sensors, and the shaping condition S2 indicates a control command by the control apparatus 200, the physical amount S 1 and the shaping condition S2 are not limited to the example. Note that as an example, the state variable acquisition unit 2402 may directly acquire at least part of the physical amount S1 from various kinds of sensors. Further, as an example, the state variable acquisition unit 2402 may acquire at least part of the shaping condition S2 by referring to the shaping condition S2 (shaping condition S2 determined in one preceding learning cycle) stored in the memory 240a (see Fig. 1) determined by the decision making unit 2408.

The physical amount S1 includes at least one of captured image data of a shaped portion imaged by the imaging unit 250, appearance of the shaped portion obtained by processing the captured image data, a current waveform of the beam source 170 from the current sensor 252, a voltage waveform of the beam source 170 from the voltage sensor 253, energy of the beam from the beam monitor 251, a wall temperature inside the shaping chamber 102 from the thermometer 254, a thickness of the solidified portion from the molten pool monitor 175, a shaping bead width from the molten pool monitor 175, oxygen concentration from the concentration meter 255 or a sputtering occurrence amount. Note that as an example, the sputtering occurrence amount can be calculated from a sputter crater formed on the shaped object (solidified portion) by processing the captured image data acquired by the imaging unit 250. These physical amounts S1 can change by change of at least one of the shaping conditions S2.

The learning model generation unit 2404 learns a learning model (shaping condition S2 of the AM apparatus 100 with respect to the state variable SV) in accordance with an arbitrary learning algorithm that is collectively referred to as machine learning. The learning model to be learned/generated is stored in the memory 240a. The learning model generation unit 2404 repeatedly executes learning on the basis of the state variable SV acquired by the state variable acquisition unit 2402. The learning model generation unit 2404 acquires a plurality of state variables SV and distinguishes characteristics of the state variables SV to interpret correlation. Further, the learning model generation unit 2404 interprets correlation of the state variable SV to be acquired next when a certain shaping condition S2 is determined for the current state variable SV. Then, the learning model generation unit 2404 optimizes determination of the shaping condition S2 for the acquired state variable SV by repeating learning. As an example, the learning model generation unit 2404 learns/generates a learning model to determine a shaping condition such that a temperature of a position irradiated with the beam falls within a range of the melting point of the material + 2% to 10% so as to achieve melting under a mild condition of the material which will be described later. Further, as an example, the learning model generation unit 2404 learns/generates a learning model so as to increase a following degree of a shaping result with respect to the three-dimensional data D1 (shape command) of the object to be shaped, that is, so as to decrease an error between the shaped object and a shaping command. Further, as an example, the learning model generation unit 2404 learns/generates a learning model so as to shorten a period required for shaping the shaped object. Note that the machine learning apparatus 240 may calculate the following degree of the shaping result with respect to the shaping command and the period required for shaping the shaped object on the basis of the state variable SV. Further, as an example, the learning model generation unit 2404 learns/generates a learning model so that the shaping condition S2 less changes during shaping.

The learning model generation unit 2404 can learn a learning model in accordance with an arbitrary learning algorithm that is collectively referred to as machine learning and, as an example, can execute reinforcement learning. The machine learning is a method in which a reward is provided to an action (output) executed for a current state (input) in a certain environment to generate a learning model that can obtain a maximum reward. As an example where the reinforcement learning is performed, the learning model generation unit 2404 includes an evaluation value calculation unit 2405 that calculates an evaluation value on the basis of the state variable S1, and a learning unit 2406 that learns the learning model on the basis of the evaluation value. Hereinafter, a learning method by the learning model generation unit 2404 using Q-learning will be described as an example of the machine learning.

The Q-learning is a method in which a function Q(s, a) representing a value of an action in a case where an action a is selected in a state s is learned using the state s of a subject (corresponding to the state variable SV in the present embodiment) and the action a that can be selected by the subject in the state (corresponding to the shaping condition S2 in the present embodiment) as independent variables. Selecting the action a in which the value Q(s, a) becomes the highest in the state s is an optimum solution. By starting the Q-learning in a state where correlation between the state s and the action a is unknown and repeating trial and error of selecting various actions a in an arbitrary state s, the value function Q is repeatedly updated, so that the solution becomes close to the optimum solution. An updating expression of the function Q(s, a) is expressed with the following expression.

[Formula 1]

$$Q(S_t, a_t) \leftarrow Q(S_t, a_t) + \alpha \left( r_{t+1} + \gamma \max_a Q(S_{t+1}, a) - Q(S_t, a_t) \right)$$

Here, st and at are a state and an action at time t, and the state changes to st+i by the action at. $r_{t+1}$ means a reward when the action a is performed in the state s. A term of maxQ means a value of Q when the action a which (is consider at time t to) is to provide maximum value Q is performed at time t+1. $\alpha$ is a learning coefficient and arbitrarily set so as to satisfy $0 < \alpha \leq 1$. $\gamma$ is a discount rate and arbitrarily set so as to satisfy $0 < \gamma \leq 1$. Further, the evaluation value calculation unit 2405 calculates a reward r using the state variable SV as the state s and using the shaping condition S2 as the action a in expression 1.

As an example, the evaluation value calculation unit 2405 may provide a greater reward r for higher stability of the physical amount S1, that is, provide a greater reward r as the physical amount S1 acquired this time less changes from the previously acquired physical amount S1. Still further, as an example, the evaluation value calculation unit 2405 may provide a greater reward r as deviation between the shaping condition S2 (control command) and the physical amount S1 corresponding to the shaping condition S2 is smaller, that is, provide a greater reward r as deviation between the control command and an actual measurement value is smaller. Yet further, as an example, the evaluation value calculation unit 2405 may provide a greater reward r as the sputtering occurrence amount is smaller. Further, as an example, the evaluation value calculation unit 2405 may provide a greater reward r as an energy consumption amount at the AM apparatus 100 is smaller. Still further, as an example, the evaluation value calculation unit 2405 may provide a greater reward r as a following degree of the shaping result with respect to the shape command is higher. Yet further, as an example, the evaluation value calculation unit 2405 may provide a greater reward r as a period required for shaping is shorter. Further, as an example, the evaluation value calculation unit 2405 may divide whether or not the appearance of the shaped portion is appropriate into two or more stages and may provide a greater reward r as the appearance of the shaped portion is more favorable.

Further, as an example, the evaluation value calculation unit 2405 may provide a greater reward r when a temperature of a beam irradiation position falls within a range of the melting point of the material + 2% to 10%, that is, when the material 152 melts under a mild condition. Here, mild melting will be described. In the following description, a case will be described as an example where a stainless steel (SUS) is used as the material powder 152. Fig. 3 is a view schematically illustrating the temperature and change in state in a case where the SUS is heated. As illustrated in Fig. 3, the SUS reaches a melting point (T1) by being heated and is put into a mixture state of a solid and a liquid. The SUS is all put into a liquid state by being further heated. The SUS reaches a boiling point (T2) by being further heated and is put into a mixture state of a liquid and a gas and is all put into a gas state by being further heated. While Fig. 3 illustrates an example of the SUS whose melting point (T1) is 1450°C and the boiling point (T2) is 2750°C, it should be noted that physical properties such as a boiling point and a melting point are different depending on a difference in components of the SUS. In the AM method, a desired object is shaped by melting and solidifying material powder, and thus, it is necessary to heat the material powder to a temperature equal to or higher than a melting point.

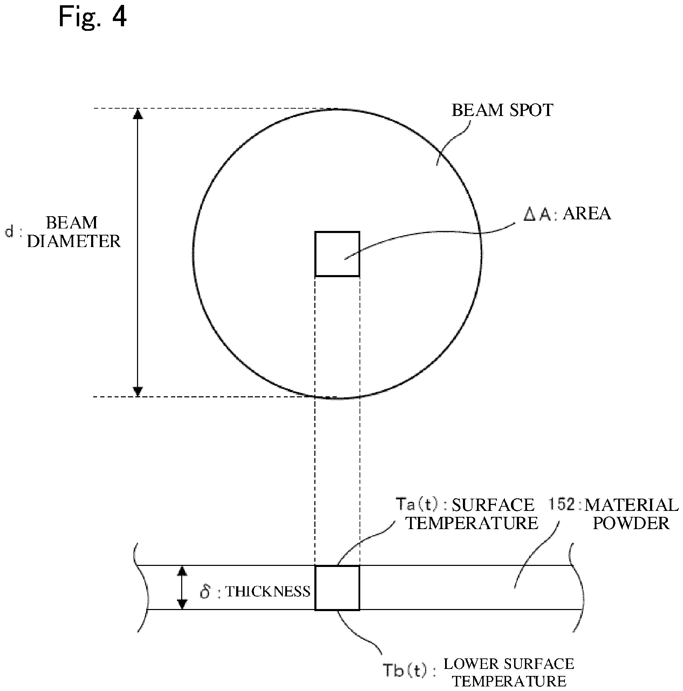

Fig. 4 is a view for explaining rise in temperature when heat is transferred below from a surface of the material in a case where a surface of the material is irradiated with a beam. Fig. 4 illustrates states of the material powder 152 irradiated with a beam, viewed from above and viewed from a lateral side. As illustrated in Fig. 4, it is assumed that a beam having a diameter d is radiated. As illustrated in Fig. 4, heat conduction and rise in temperature in a region having an area ΔA and a thickness Δ in a beam spot having the diameter d will be considered.

A temperature (Ta(0)) of the material 152 before irradiation of the beam is the same as a temperature (Tb(0)) of a lower surface of the material. In other words, Ta(0) = Tb(0). A temperature Tb(t) of the lower surface of the material when an arbitrary period t has elapsed since the beam had been radiated can be expressed as:

$$\text{Expression (1): } Tb(t) = (Ta(t) - Ta(0)) \times (1 - \exp(-t/\tau c)) + Tb(0)$$

Here $\tau c$ is a time constant and can be expressed as:

$$\text{Expression (2): } \tau c = (m \times c) \times R$$

where m: mass [kg] = $\Delta A \times \Delta \times \rho$

    $\rho$: density [kg/m$^3$]
    c: specific heat [J/kg·K]
    m $\times$ c: heat capacity [J/K]
    R: thermal resistance [K/W]

Further, the thermal resistance R can be expressed as:

$$\text{Expression (3): } R = (\Delta/(\lambda \times \Delta A))$$

where $\lambda$: thermal conductivity [W/m·K]
Further, from expression (2) and expression (3), the time constant $\tau c$ can be expressed as:

$$\text{Expression (4): } \tau c = (\Delta A \times \Delta \times \rho \times c) \times (\Delta/(\lambda \times \Delta A)) = \rho \times c \times \Delta^2/\lambda$$

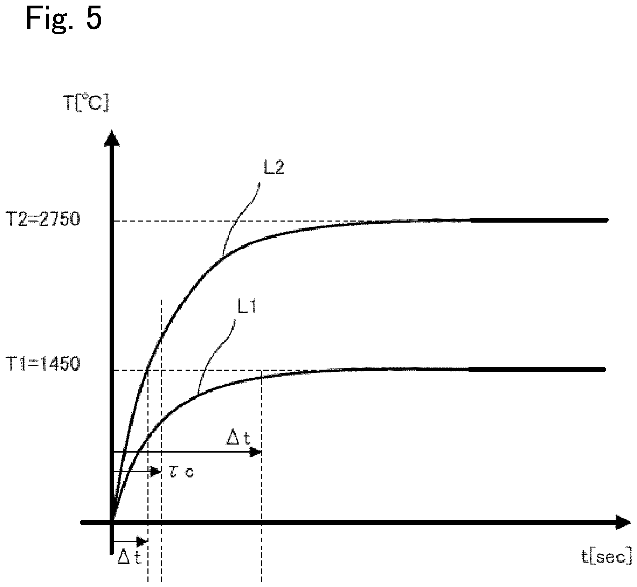

Fig. 5 is a graph schematically indicating rise in temperature of a lower surface Tb when a surface Ta of the SUS that is a material is heated. A curve L1 in Fig. 5 indicates change in temperature of the lower surface of the material when the beam is radiated under a condition (mild condition) that the temperature of the surface of the material reaches substantially the melting point (T1 = 1450°C) by beam irradiation. In other words, the condition is a condition that satisfies Ta(t) = 1450°C. Further, a curve L2 in Fig. 5 indicates change in temperature of the lower surface of the material when the beam is irradiated under a condition (strict condition) that the temperature of the surface of the material reaches substantially the boiling point (T2 = 2750°C) by beam irradiation. In other words, the condition is a condition that satisfies Ta(t) = 2750°C. The time constant $\tau c$ is a condition determined by a physical property and arrangement (thickness $\Delta$) of the material, and thus, as can be seen from expression (1) and the graph in Fig. 5, a period $\Delta t$ required for the lower surface of the material to reach the melting point (T1) becomes shorter when the beam is radiated under the strict condition. In other words, the period $\Delta A$ required for the lower surface of the material to reach the melting point (T1) becomes shorter as a beam output is greater. Thus, in the AM method, as one measure for shortening the shaping period, it can be considered to increase the beam output and increase scanning speed of the beam. However, as described above, if irradiation energy of the beam is increased, the surface of the material powder layer excessively rises, which makes it likely to cause fume and sputtering, and may cause a defect in the shaped object or may cause a failure in an irradiation system of the beam of the AM apparatus. Thus, in one embodiment, the learning model generation unit 2404 learns/generates a learning model so as to shorten the shaping period under the mild condition.
In a case of beam irradiation under the mild condition, it is assumed that the surface temperature Ta(t) of the material reaches the melting point (T1 = 1450°C) at a certain moment, and the surface temperature Ta(t) = T1 (= 1450°C) is maintained during a certain period $\Delta t$ while the beam is radiated. In a case of the mild condition on the basis of such assumption, the period $\Delta t$ required for the temperature Tb(t) of the lower surface at the depth $\Delta$ from the surface of the material to reach the melting point (T1 = 1450°C) becomes as follows:

$$\text{Expression (5): } \Delta t \approx 4\tau c = 4 \times \rho \times c \times \Delta^2/\lambda$$

Note that expression (5) is obtained by setting the period required for Tb(t) to reach approximately 98% of rise of the temperature of the surface (Ta(t) - Ta(0)) as $\Delta t$ in expression (1). More strictly, a period during which the surface temperature Ta(t) can be maintained at T1(= 1450°C) is determined by absorption of latent heat required for the material to be transformed from a solid to a liquid and an amount of diffused heat by head conduction during the absorption, and after the period has elapsed, the surface temperature Ta(t) starts rising. By this means, the temperature Tb(t) of the lower surface also rises and can reach to a temperature equal to or higher than the melting point. Further, mild melting intended in the present application can also be achieved using a method in which irradiation energy of the beam and scanning of the beam are controlled so that the surface temperature Ta(t), when measured, falls within a range of the melting point of the material + 2% to 10%. Here, emphasis is placed on that expression (5) enables parameter comparison (qualitative comparison) and relative quantitative comparison of a relationship among the density p, the specific heat c, the thermal conductivity λ, the thickness Δ and the required period Δt for each material. In one embodiment, to achieve shaping under the mild condition, the intensity of the beam and the size of the beam on the material may be determined so that the temperature of the lower surface of the material reaches the melting point during a beam irradiation period of approximately 2τc to approximately 4τc. Alternatively, the intensity of the beam and the size of the beam on the material may be determined so as to achieve shaping under the mild condition during the beam irradiation period of approximately 3τc to approximately 4τc. In other words, as an example, the evaluation value calculation unit 2405 may provide a greater reward r when the temperature of the lower surface of the material reaches the melting point during approximately 2τc to approximately 4τc. Further, as an example, the evaluation value calculation unit 2405 may provide a greater reward r when the temperature of the lower surface of the material reaches the melting point during approximately 3τc to approximately 4τc.

As can be seen from expression (4) and expression (5), τc is proportional to a square of the thickness Δ of the material, and thus, the time constant τc becomes smaller as the thickness Δ of the material is made smaller, and as a result, Δt also becomes smaller. Thus, as an example, the evaluation value calculation unit 2405 may provide a greater reward r as the thickness Δ per one layer is smaller.

Referring to Fig. 2 again, the decision making unit 2408 determines the shaping condition of the AM apparatus 100 on the basis of the learning model learned/generated by the learning model generation unit 2404 and the state variable SV acquired by the state variable acquisition unit 2402 and outputs the shaping condition to the control apparatus 200. Note that the decision making unit 2408 may determine the shaping condition for each period that is the same as or corresponds to the learning cycle by the learning model generation unit 2404 or for each period shorter or longer than the learning cycle.

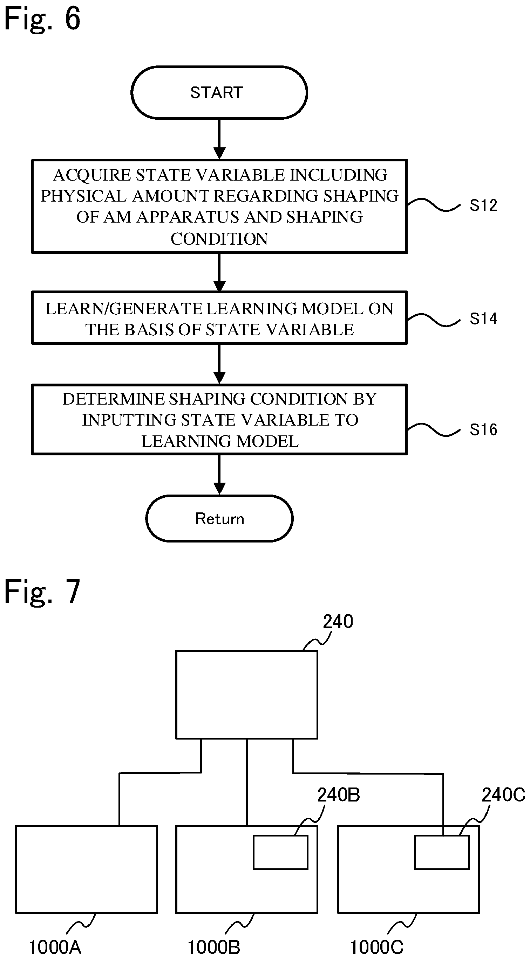

Fig. 6 is a flowchart illustrating an example of a method for machine learning of determination of the shaping condition by the machine learning apparatus 240. The machine learning apparatus 240 (state variable acquisition unit 2402) acquires the state variable SV including the physical amount S1 and the shaping condition S2 (step S12). Subsequently, the machine learning apparatus 240 (learning model generation unit 2404) learns/generates the learning model on the basis of the acquired state variable SV (step S14). Then, the machine learning apparatus 240 (decision making unit 2408) determines the shaping condition at the AM apparatus 100 by inputting the state variable SV acquired by the state variable acquisition unit 2402 to the learning model learned/generated by the learning unit 2406 (step S16).

As described above, the machine learning apparatus 240 of the present embodiment acquires the state variable SV including the physical amount S1 regarding shaping during shaping and the shaping condition S2 of the AM apparatus 100 at the state variable acquisition unit 2402. Here, the shaping condition S2 includes at least one of the intensity of the beam, the size of the beam on the material, the scanning speed of the beam, the irradiation angle of the beam, the focus offset amount of the beam, the focal distance of the beam, the characteristics of the material, the paving condition of the material, the amount of the shielding gas or the overlapping amount of the beam. Further, the physical amount S1 includes at least one of the captured image data of the shaped portion imaged by the imaging unit 250, the appearance of the shaped portion obtained by processing the captured image data, the current waveform of the beam source 170, the voltage waveform of the beam source 170, the energy of the beam, the wall temperature inside the shaping chamber 102, the thickness of the solidified portion, the shaping bead width, the oxygen concentration or the sputtering occurrence amount. Then, the machine learning apparatus 240 learns the learning model for determining the shaping condition and determines the shaping condition on the basis of the acquired state variable SV. By this means, it is possible to determine an appropriate shaping condition at the AM apparatus.

(Modification 1)

The machine learning apparatus 240 described above performs machine learning of determination of the shaping condition S2 of the AM apparatus 100. The machine learning apparatus 240 may perform machine learning of determination of a maintenance timing of the AM apparatus 100 in place of or in addition to the shaping condition S2 of the AM apparatus 100. Note that the machine learning apparatus 240 may employ different machine learning algorithms, for example, may learn/generate the learning model through reinforcement learning for the shaping condition S2 and may learn/generate the learning model through supervised learning for the maintenance timing. Further, as an embodiment, the machine learning apparatus 240 may determine the maintenance timing for each group of components of the AM apparatus 100, determined in advance.

As an embodiment, the machine learning apparatus 240 performs learning of determination of the maintenance timing on the basis of the above-described state variable SV. As an example, the physical amount S1 in the state variable SV includes at least one of the wall temperature inside the shaping chamber 102 or drive torque of a mechanical system of the AM apparatus 100. As an example, the machine learning apparatus 240 learns/generates the learning model so as to determine the maintenance timing earlier as the wall temperature inside the shaping chamber 102 is higher, because it can be considered that a higher wall temperature inside the shaping chamber 102 encourages deterioration of a sealing body for sealing between the inner wall of the shaping chamber 102 and the lift table 108. Further, as an example, the machine learning apparatus 240 judges that deterioration of the sealing body proceeds as the drive torque by the drive mechanism 110 of the lift table 108 is greater and learns/generates the learning model so as to determine the maintenance timing earlier as the drive torque by the drive mechanism 110 of the lift table 108 is greater. Further, as an example, the machine learning apparatus 240 learns/generates the learning model so as to determine the maintenance timing later within a range not causing an abnormality at the AM apparatus 100, so as to reduce a frequency of maintenance.

Then, the machine learning apparatus 240 or the control apparatus 200 inputs the state variable SV to the learning model learned/generated by the machine learning apparatus 240 and outputs the maintenance timing. The AM apparatus 100 may notify the user of the output maintenance timing using notification means such as an indicator which is not illustrated. In this manner, as a result of the machine learning apparatus 240 learning/generating the learning model for determination of the maintenance timing of the AM apparatus 100, it is possible to perform maintenance of the AM apparatus 100 at an appropriate timing, so that it is possible to improve efficiency of the AM apparatus 100.


(Modification 2)

In the above-described embodiment, the machine learning apparatus 240 is mounted on the AM apparatus 100 and learns/generates the learning model for determination of the shaping condition S2 on the basis of the state variable SV at the AM apparatus 100. However, the present invention is not limited to such an example, and the machine learning apparatus 240 may be provided outside the AM apparatus 100 and may be able to communicate with the AM apparatus 100 in a wired or wireless manner. In this case, the machine learning apparatus 240 only requires to acquire the state variable SV from the AM apparatus 100 through communication and learn/generate the learning model on the basis of the acquired state variable SV. In this case, as an example, the machine learning apparatus 240 may determine the shaping condition of the AM apparatus 100 on the basis of the state variable SV and may transmit the shaping condition to the AM apparatus 100. Further, as an example, the machine learning apparatus 240 may transmit the updated learning model to the AM apparatus 100, and the AM apparatus 100 may determine the shaping condition by utilizing the updated learning model.

Fig. 7 is a view illustrating a schematic configuration of an AM system in the modification. The AM system includes the machine learning apparatus 240, and a plurality of AM apparatuses (in the example illustrated in Fig. 4, three AM apparatuses 1000A, 1000B and 1000C) connected so as to be able to perform communication in a wired or wireless manner. The machine learning apparatus 240 in the modification can implement substantially the same functions as the functions of the machine learning apparatus 240 in the above-described embodiment, and thus, overlapping description will be omitted. The machine learning apparatus 240 in the modification can acquire the state variables SV from the plurality of AM apparatuses. This enables the machine learning apparatus 240 to acquire more state variables SV, so that it is possible to improve learning accuracy of the learning model. As an example, the plurality of AM apparatuses may include the AM apparatus 1000A that does not include a machine learning apparatus. In a case where the AM apparatus does not include the machine learning apparatus, the AM apparatus 1000A may perform shaping on the basis of the shaping condition S2 determined at the machine learning apparatus 240 or may perform shaping by determining the shaping condition S2 using the learning model that is transmitted from the machine learning apparatus 240 and updated. Further, as an example, the plurality of AM apparatuses may include the AM apparatuses 1000B and 1000C that include the machine learning apparatuses. The AM apparatuses 1000B and 1000C include machine learning apparatuses 240B and 240C that have the same functions and configurations as those of the machine learning apparatus 240 in the above-described embodiment. In this case, the machine learning apparatuses 240, 240B and 240C may acquire the learning models generated by the machine learning apparatuses 240, 240B and 240C from each other and may optimize the learning models. Further, one machine learning apparatus among the machine learning apparatuses 240, 240B and 240C may function as a primary machine learning apparatus, may acquire a plurality of learning models, may optimize the learning models and may transmit the updated learning models to secondary machine learning apparatuses. Here, examples of optimization of the learning models performed by the machine learning apparatuses can include generation of a distilling model on the basis of the plurality of learning models.

While the embodiment of the present invention has been described above on the basis of some examples, the above-described embodiment of the invention is provided to facilitate understanding of the present invention and does not limit the present invention. The present invention can be changed and modified without deviating from the gist of the present invention and, of course, equivalent thereof is included in the present invention. Further, an arbitrary combination or omission of the respective components described in the claims and the specification is possible within a range in which at least part of the above-described problems can be solved or within a range in which at least part of the effects can be provided.

At least the following technical idea can be recognized from the above-described embodiment.

[Form 1]

According to form 1, a machine learning apparatus for machine learning of determination of a shaping condition at an AM apparatus is proposed, the machine learning apparatus acquiring a state variable including a physical amount regarding shaping during shaping and the shaping condition,

the shaping condition including at least one of intensity of a beam, a size of the beam on a material, scanning speed of the beam, an irradiation angle of the beam, a focus offset amount of the beam, a focal distance of the beam, characteristics of the material, a paving condition of the material, an amount of a shielding gas or an overlapping amount of the beam,
the physical amount including at least one of captured image data of a shaped portion imaged by an imaging unit, appearance of the shaped portion obtained by processing the captured image data, a current waveform of a beam source, a voltage waveform of the beam source, energy of the beam, a wall temperature inside a shaping chamber, a thickness of a solidified portion, a shaping bead width, oxygen concentration or a sputtering occurrence amount, and the machine learning apparatus learning a learning model for determining the shaping condition and determining the shaping condition on the basis of the state variable. According to form 1, it is possible to determine an appropriate shaping condition at the AM apparatus.

[Form 2]

According to form 2, in form 1, the machine learning apparatus includes an evaluation value calculation unit configured to calculate an evaluation value on the basis of the state variable, and a learning unit configured to learn the learning model on the basis of the evaluation value.

[Form 3]

According to form 3, in form 2, the machine learning apparatus calculates a following degree of a shaping result with respect to a shape command and a period required for shaping on the basis of the state variable, and
the evaluation value calculation unit provides a higher evaluation value as the following degree is higher and the period is shorter. According to form 3, the shaping condition can be determined so as to be able to make the shaping result closer to the shape command and reduce the period required for shaping.

[Form 4]

According to form 4, in form 2 or 3, the evaluation value calculation unit satisfies at least one of:

providing a higher evaluation value as stability of the physical amount is higher;
providing a higher evaluation value as deviation between a control command of the AM apparatus and the physical amount corresponding to the control command is smaller;
providing a higher evaluation value as a response period in response to the control command of the AM apparatus is shorter;
providing a higher evaluation value as the sputtering occurrence amount is smaller; or
providing a higher evaluation value as an energy consumption amount at the AM apparatus is smaller.

[Form 5]

According to form 5, in form 1 to form 4, the paving condition of the material includes at least one of a thickness of the material to be paved or a pressure to be applied when the material is paved.

[Form 6]

According to form 6, in form 1 to form 5, the intensity of the beam includes at least one of a current of the beam source, a voltage of the beam source or energy of the beam.

[Form 7]

According to form 7, in form 1 to form 6, the size of the beam on the material includes at least one of a size in a scanning direction of the beam or a size in a direction perpendicular to the scanning direction of the beam.

[Form 8]

According to form 8, in form 1 to form 7, the characteristics of the material include at least one of density, specific heat or thermal conductivity.

[Form 9]

According to form 9, in form 1 to form 8, the learning model is learned so that the shaping condition is determined such that a surface temperature of the material becomes a temperature of a melting point + 2% to 10%.

[Form 10]

According to form 10, in form 1 to form 9, the machine learning apparatus is configured to be able to output a maintenance timing of the AM apparatus, and learns a learning model for calculating the maintenance timing and calculates the maintenance timing on the basis of the state variable.

[Form 11]

According to form 11, in form 10, the physical amount includes at least one of a wall temperature inside a shaping chamber or drive torque of a mechanical system of the AM apparatus.

[Form 12]

According to form 12, an AM apparatus including the machine learning apparatus according to any one of form 1 to form 11 and shaping a shaped object on the basis of the shaping condition output from the machine learning apparatus, is proposed. According to form 12, the shaped object can be shaped on the basis of the shaping condition output from the machine learning apparatus, so that it is possible to shorten a shaping period while preventing occurrence of fume and sputtering.

[Form 13]

According to form 13, a machine learning method for machine learning of determination of a shaping condition at an AM apparatus is proposed, the machine learning method including:

acquiring a state variable including a physical amount regarding shaping during shaping and the shaping condition, the shaping condition including at least one of intensity of a beam, a size of the beam on a material, scanning speed of the beam, an irradiation angle of the beam, a focus offset amount of the beam, a focal distance of the beam, characteristics of the material, a paving condition of the material, an amount of a shielding gas or an overlapping amount of the beam,
the physical amount including at least one of captured image data of a shaped portion imaged by an imaging unit, appearance of the shaped portion obtained by processing the captured image data, a current waveform of a beam source, a voltage waveform of the beam source, energy of the beam, a wall surface inside a shaping chamber, a thickness of a solidified portion, a shaping bead width, oxygen concentration or a sputtering occurrence amount; and
learning a learning model for determining the shaping condition and determining the shaping condition on the basis of the state variable. According to form 13, it is possible to determine an appropriate shaping condition at the AM apparatus.

[Form 14]

According to form 14, a method for generating a learning model for determining a shaping condition at an AM apparatus is proposed, the method for generating the learning model including:

acquiring a plurality of state variables each including a physical amount regarding shaping during shaping and the shaping condition,

the shaping condition including at least one of intensity of a beam, a size of the beam on a material, scanning speed of the beam, an irradiation angle of the beam, a focus offset amount of the beam, a focal distance of the beam, characteristics of the material, a paving condition of the material, an amount of a shielding gas or an overlapping amount of the beam,

the physical amount including at least one of captured image data of a shaped portion imaged by an imaging unit, appearance of the shaped portion obtained by processing the captured image data, a current waveform of a beam source, a voltage waveform of the beam source, energy of the beam, a wall surface inside a shaping chamber, a thickness of a solidified portion, a shaping bead width, oxygen concentration or a sputtering occurrence amount; and generating a learning model that inputs the state variable and outputs the shaping condition on the basis of the acquired plurality of state variables. According to mode 14, it is possible to generate a learning model that can determine an appropriate shaping condition at the AM apparatus.

The present application claims priority on the basis of Japanese Patent Application No. 2019-161267 filed on September 4, 2019. The entire disclosure including the specification, the claims, the drawings and the abstract of Japanese Patent Application No. 2019-161267 is incorporated herein by reference. The entire disclosure of International Publication No. WO 2015/151839 (PTL 1) and Japanese Patent Laid-Open No. 2005-012238 (PTL 2) is incorporated herein by reference.

REFERENCE SIGNS LIST

100    AM apparatus

102      Shaping chamber
106      Buildup chamber
108      Lift table
110      Drive mechanism
112      Stage
114      Baseplate
150      Material supply mechanism
152      Material powder
154      Storage container
159      Roller
160      Movement mechanism
170      Beam source
171      Adjustment apparatus
172      Laser
173      Beam shaper
174      Scanning mechanism
175      Molten pool monitor
200      Control apparatus
240      Machine learning apparatus
2402      State variable acquisition unit
2402      Learning unit model generation unit
2404      Learning model generation unit
2405      Evaluation value calculation unit
2406      Learning unit
2408      Decision making unit
250      Imaging unit
251      Beam monitor
252      Current sensor
253      Voltage sensor
254      Thermometer
255      Concentration meter
256      Drive torque monitor

257     Drive torque monitor
D1      Three-dimensional data
M1      Shaped object

**Claims**

1.  A machine learning apparatus for machine learning of determination of a shaping condition at an AM apparatus,

    the machine learning apparatus acquiring a state variable including a physical amount regarding shaping during shaping and the shaping condition,
    the shaping condition including at least one of intensity of a beam, a size of the beam on a material, scanning speed of the beam, an irradiation angle of the beam, a focus offset amount of the beam, a focal distance of the beam, characteristics of the material, a paving condition of the material, an amount of a shielding gas or an overlapping amount of the beam,
    the physical amount including at least one of captured image data of a shaped portion imaged by an imaging unit, appearance of the shaped portion obtained by processing the captured image data, a current waveform of a beam source, a voltage waveform of the beam source, energy of the beam, a wall temperature inside a shaping chamber, a thickness of a solidified portion, a shaping bead width, oxygen concentration or a sputtering occurrence amount,
    the machine learning apparatus learning a learning model for determining the shaping condition and determining the shaping condition on a basis of the state variable.

2.  The machine learning apparatus according to claim 1,
    wherein the machine learning apparatus comprises:

    an evaluation value calculation unit configured to calculate an evaluation value on a basis of the state variable; and
    a learning unit configured to learn the learning model on a basis of the evaluation value.

3.  The machine learning apparatus according to claim 2,

    wherein the machine learning apparatus calculates a following degree of a shaping result with respect to a shape command and a period required for shaping on a basis of the state variable, and
    the evaluation value calculation unit provides a higher evaluation value as the following degree is higher and the period is shorter.

4.  The machine learning apparatus according to claim 2 or 3,
    wherein the evaluation value calculation unit satisfies at least one of:

    providing a higher evaluation value as stability of the physical amount is higher;
    providing a higher evaluation value as deviation between a control command of the AM apparatus and the physical amount corresponding to the control command is smaller;
    providing a higher evaluation value as a response period in response to the control command of the AM apparatus is shorter;
    providing a higher evaluation value as the sputtering occurrence amount is smaller; or
    providing a higher evaluation value as an energy consumption amount at the AM apparatus is smaller.

5.  The machine learning apparatus according to any one of claims 1 to 4,
    wherein the paving condition of the material includes at least one of a thickness of the material to be paved or a pressure to be applied when the material is paved.

6.  The machine learning apparatus according to any one of claims 1 to 5,
    wherein the intensity of the beam includes at least one of a current of the beam source, a voltage of the beam source or energy of the beam.

7.  The machine learning apparatus according to any one of claims 1 to 6,
    wherein the size of the beam on the material includes at least one of a size in a scanning direction of the beam or a size in a direction perpendicular to the scanning direction of the beam.

14

8. The machine learning apparatus according to any one of claims 1 to 7,
   wherein the characteristics of the material include at least one of density, specific heat or thermal conductivity.

9. The machine learning apparatus according to any one of claims 1 to 8,
   wherein the learning model is learned so that the shaping condition is determined such that a surface temperature of the material becomes a temperature of a melting point + 2% to 10%.

10. The machine learning apparatus according to any one of claims 1 to 9,

    wherein the machine learning apparatus is configured to be able to output a maintenance timing of the AM apparatus, and
    learns a learning model for calculating the maintenance timing and calculates the maintenance timing on a basis of the state variable.

11. The machine learning apparatus according to claim 10,
    wherein the physical amount includes at least one of a wall temperature inside a shaping chamber or drive torque of a mechanical system of the AM apparatus.

12. An AM apparatus including the machine learning apparatus according to any one of claims 1 to 11 and shaping a shaped object on a basis of the shaping condition output from the machine learning apparatus.

13. A machine learning method for machine learning of determination of a shaping condition at an AM apparatus, the machine learning method comprising:

    acquiring a state variable including a physical amount regarding shaping during shaping and the shaping condition,
    the shaping condition including at least one of intensity of a beam, a size of the beam on a material, scanning speed of the beam, an irradiation angle of the beam, a focus offset amount of the beam, a focal distance of the beam, characteristics of the material, a paving condition of the material, an amount of a shielding gas or an overlapping amount of the beam,
    the physical amount including at least one of captured image data of a shaped portion imaged by an imaging unit, appearance of the shaped portion obtained by processing the captured image data, a current waveform of a beam source, a voltage waveform of the beam source, energy of the beam, a wall temperature inside a shaping chamber, a thickness of a solidified portion, a shaping bead width, oxygen concentration or a sputtering occurrence amount; and
    learning a learning model for determining the shaping condition and determining the shaping conditions on a basis of the state variable.

14. A method for generating a learning model for determining a shaping condition at an AM apparatus, the method for generating the learning model comprising:

    acquiring a plurality of state variables each including a physical amount regarding shaping during shaping and the shaping condition,
    the shaping condition including at least one of intensity of a beam, a size of the beam on a material, scanning speed of the beam, an irradiation angle of the beam, a focus offset amount of the beam, a focal distance of the beam, characteristics of the material, a paving condition of the material, an amount of a shielding gas or an overlapping amount of the beam,
    the physical amount including at least one of captured image data of a shaped portion imaged by an imaging unit, appearance of the shaped portion obtained by processing the captured image data, a current waveform of a beam source, a voltage waveform of the beam source, energy of the beam, a wall temperature inside a shaping chamber, a thickness of a solidified portion, a shaping bead width, oxygen concentration or a sputtering occurrence amount; and
    generating a learning model that inputs the state variable and outputs the shaping condition on a basis of the acquired plurality of state variables.

# Fig. 1

## Fig. 2

240

MACHINE LEARNING APPARATUS

2402

STATE VARIABLE ACQUISITION UNIT — SV

STATE VARIABLE

PHYSICAL AMOUNT — S1

SHAPING CONDITION — S2

2404

LEARNING MODEL GENERATION UNIT

EVALUATION VALUE CALCULATION UNIT — 2405

LEARNING UNIT — 2406

DECISION MAKING UNIT — 2408

## Fig. 3

T[°C]

T2=2750

T1=1450

SOLID | SOLID/LIQUID | LIQUID | LIQUID/GAS | GAS

t[sec]

Fig. 4

BEAM SPOT

$\Delta A$ : AREA

$d$ : BEAM DIAMETER

$Ta(t)$ : SURFACE TEMPERATURE    152 : MATERIAL POWDER

$\delta$ : THICKNESS

$Tb(t)$ : LOWER SURFACE TEMPERATURE

Fig. 5

# Fig. 6

START

↓

ACQUIRE STATE VARIABLE INCLUDING PHYSICAL AMOUNT REGARDING SHAPING OF AM APPARATUS AND SHAPING CONDITION — S12

↓

LEARN/GENERATE LEARNING MODEL ON THE BASIS OF STATE VARIABLE — S14

↓

DETERMINE SHAPING CONDITION BY INPUTTING STATE VARIABLE TO LEARNING MODEL — S16

↓

Return

# Fig. 7

240

240B  240C

1000A  1000B  1000C

EP 4 026 633 A1

**INTERNATIONAL SEARCH REPORT**

| International application No. |
|---|
| PCT/JP2020/031966 |

A. CLASSIFICATION OF SUBJECT MATTER
Int.Cl. B22F3/105(2006.01)i, B22F3/16(2006.01)i, B33Y30/00(2015.01)i,
B33Y50/00(2015.01)i, B29C64/153(2017.01)i, B29C64/386(2017.01)i,
G06N20/00(2019.01)i
FI: B22F3/105, G06N20/00, B33Y50/00, B22F3/16, B29C64/153, B33Y30/00,
B29C64/386
According to International Patent Classification (IPC) or to both national classification and IPC

B. FIELDS SEARCHED

Minimum documentation searched (classification system followed by classification symbols)
Int.Cl. B22F3/105, B22F3/16, B33Y30/00, B33Y50/00, B29C64/153,
B29C64/386, G06N20/00

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2018/217903 A1 (RELATIVITY SPACE, INC.) | 1, 2, 5-14 |
| A | 29.11.2018 (2018-11-29), paragraphs [0003]-[0009], [0054]-[0072], [0141]-[0145], [0165], [0177]-[0182], fig. 1-16 | 3, 4 |
| Y | JP 2018-144078 A (FANUC LTD.) 20.09.2018 (2018-09- | 1, 2, 5-14 |
| A | 20), claims 1-12, paragraphs [0012]-[0082], fig. 1-9 | 3, 4 |
| Y | JP 2019-130559 A (FANUC LTD.) 08.08.2019 (2019-08- | 1, 2, 5-14 |
| A | 08), claims 1-15, paragraphs [0068]-[0089], fig. 1-16 | 3, 4 |
| Y | JP 2019-512757 A (VITO NV) 16.05.2019 (2019-05- | 1, 2, 5-14 |
| A | 16), paragraphs [0080]-[0165] | 3, 4 |

☒ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15.09.2020 | 24.09.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/031966

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | WO 2018/204981 A1 (MONASH UNIVERSITY) 15.11.2018<br>(2018-11-15), claims 1-28, paragraphs [0001],<br>[0041]-[0111], fig. 1-6 | 10-12<br>1-9 |

Form PCT/ISA/210 (second sheet) (January 2015)

INTERNATIONAL SEARCH REPORT

Information on patent family members

International application No.

PCT/JP2020/031966

| | | |
|---|---|---|
| WO 2018/217903 A1 | 29.11.2018 | US 2018/0341248 A1 |
| JP 2018-144078 A | 20.09.2018 | US 2018/0260712 A1<br>claims 1-12, paragraphs [0012]-[0108],<br>fig. 1-9<br>CN 108568596 A |
| JP 2019-130559 A | 08.08.2019 | US 2019/0235481 A1<br>claims 1-15, paragraphs [0115]-[0146],<br>fig. 1-16<br>CN 110091084 A |
| JP 2019-512757 A | 16.05.2019 | US 2019/0019080 A1<br>paragraphs [0128], [0134]-[0190]<br>WO 2017/114810 A1<br>CN 108604310 A |
| WO 2018/204981 A1 | 15.11.2018 | CN 110709247 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015151839 A
- JP 2018123381 A
- JP 2019161267 A
- JP 2005012238 A